# EUROPÄISCHE PATENTSCHRIFT

(11) **EP 1 202 872 B1**
(45) Veröffentlichungstag und Bekanntmachung des Hinweises auf die Patenterteilung: **11.04.2007**
(21) Anmeldenummer: 00953155.9
(22) Anmeldetag: 04.08.2000
(51) Int. Cl.: B60N 3/00, B60N 3/10, B60N 2/46

(54) **VERSTAUVORRICHTUNG AN EINEM FAHRZEUGSITZ**
STOW-AWAY DEVICE MOUNTED ON A MOTOR VEHICLE SEAT
DISPOSITIF DE RANGEMENT MONTE SUR UN SIEGE DE VEHICULE

(30) Priorität: 07.08.1999 DE 19936741
(43) Veröffentlichungstag der Anmeldung: 08.05.2002
(73) Patentinhaber: AGUTI PRODUKTENTWICKLUNG & DESIGN GMBH, 88079 Kressbronn (DE)
(72) Erfinder: GRIEGER, Andreas, D-88079 Kressbronn (DE)
(74) Vertreter: Fiener, Josef
(86) Internationale Anmeldenummer: PCT/EP2000/007565
(87) Internationale Veröffentlichungsnummer: WO 2001/010671

(56) Entgegenhaltungen:
- EP-A- 0 385 861
- GB-A- 2 299 752
- US-A- 3 606 449
- US-A- 3 804 031
- US-A- 4 141 586
- US-A- 4 668 010
- US-A- 4 795 209
- US-A- 4 932 718
- US-A- 5 106 156

## Beschreibung

Die Erfindung betrifft eine Verstauvorrichtung zur Verwendung an einem Fahrzeugsitz, der zwei Armlehnen aufweist, die mit Fixierungen an dem Fahrzeugsitz, bevorzugt hochschwenkbar, angelenkt sind, wobei die Verstauvorrichtung wenigstens eine Halterungseinriehtung zur lösbaren Befestigung an der Rückseite des Fahrzeugsitzes aufweist und von Armlehne zu Armlehne reicht.

Eine derartige verstauvorrichtung wird im Handel als sog. Autositz-Tasche angeboten. Hierbei wird das obere Ende der aus Textilmaterial bestehenden Verstautasche an dem Gestänge der Kopfstütze eingehängt, so daß diese als Fixierung für die Verstauvorrichtung dient. Dies hat jedoch den Nachteil, daß bei stark geneigter Lehne des Fahrzeugsitzes die Tasche nach unten und hinten durchhängt, so daß hierdurch Mitfahrer auf den Rücksitzen behindert werden, sofern nicht das untere Ende der taschenförmigen Verstauvorrichtung nochmals am Fahrzeugsitz befestigt wird. Dies erhöht jedoch die erforderliche Zeit, um die Verstauvorrichtung an dem Fahrzeugsitz zu befestigen bzw. wieder zu lösen. Dies gilt auch für die gattungsbildende US-A-4,668,010, bei der eine Schale eingeschoben wird.

Zudem sind an vielen Fahrzeugsitzen, beispielsweise im Bus- oder im Wohnmobilbereich, die Kopfstützen einstückig mit der Rücklehne ausgebildet, so daß hierbei keine oder nur unzureichende Halterungsmöglichkeit für derartige Taschen besteht, obwohl gerade in diesem Bereich, beispielsweise bei größeren Busreisen oder Wohnmobilfahrten, der Bedarf an Verstaumögliohkeiten (z.B für Proviant oder Getränke) besonders groß ist. So ist in der GB-A-2 299 752 an der Rückseite eines Fahrzeugsitzes eine Tasche vorgesehen, die mit einem Bügel an den Seitenwangen des Sitzes befestigt wird.

Demzufolge liegt der Erfindung die Aufgabe zugrunde, eine Verstauvorrichtung zu schaffen" die in einfacher und stabiler Weise an einem Fahrzeugsitz angebracht werden kann.

Diese Aufgabe wird gelöst durch eine Verstauvorrichtung gemäß den Merkmalen des Anspruches 1. Bevorzugte Ausgestaltungen der Verstauvorrichtung sind Gegenstand der Unteransprüche.

Durch die bügelförmige Ausbildung der Halterungseinrichtung ist eine schnelle Befestigung an den Fixierungen der Armlehne, nämlich an den Schwenkachsen, durch einfaches Einhängen möglich. Zudem ergibt sich hierdurch eine stabile Befestigung an dem Fahrzeugsitz, so daß Kipp- oder Schwenkbewegungen auch bei großen Beschleunigungen bzw. Verzögerungen weitgehend ausgeschlossen sind. Die vorgeschlagene Verstauvorrichtung läßt sich schnell abnehmen und montieren, da der bevorzugte Bügel durch Andrücken gegen die Rückseite der begrenzt nachgiebigen Rücklehne sicher und einfach an den Schwenkachsen der Armlehnen eingehängt werden kann. Hierdurch ergibt sich eine einfache Nachrüstmöglichkeit mit einer Verstauvorrichtung an bestehenden Fahrzeugsitzen.

Nachfolgend wird ein Ausführungsbeispiel der Verstauvorrichtung anhand der Zeichnungen näher erläutert und beschrieben. Hierbei zeigen:
- Fig. 1: eine Rückansicht eines Fahrzeugsitzes mit einer Verstauvorrichtung;
- Fig. 2: eine Seitenansicht auf einen Fahrzeugsitz gemäß Fig. 1; und
- Fig. 3: eine Detailansicht der Verstauvorrichtung im abgenommenen Zustand.

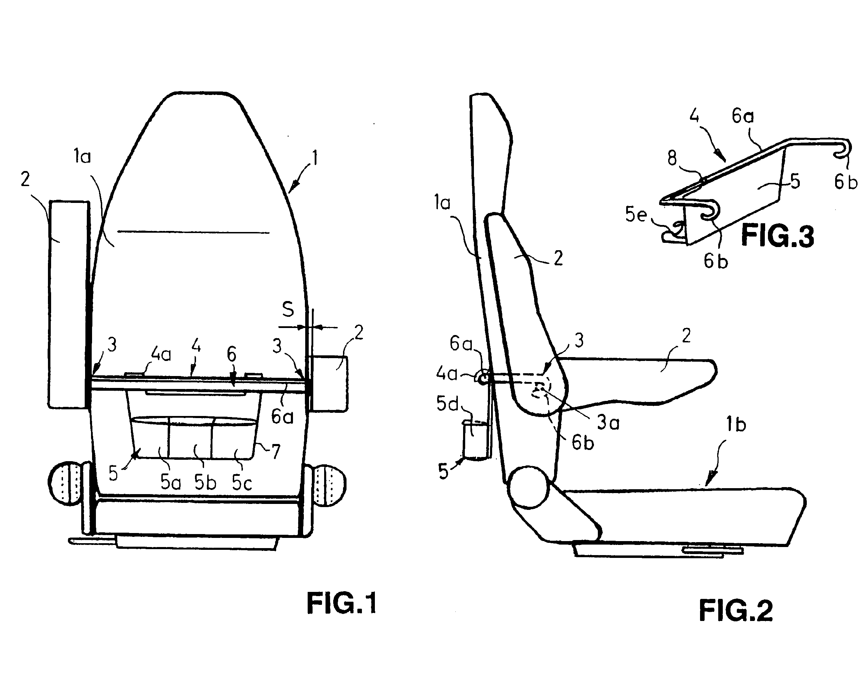

In Fig. 1 ist ein Fahrzeugsitz 1 in Rückansicht dargestellt, der in üblicher Weise aus einer Rücklehne 1a und einer sitzfläche 1b (vgl. auch Fig. 2) besteht. Etwa im unteren Drittel der Rücklehne 1a sind zwei seitliche Armlehnen 2 mit Fixierungen 3 befestigt, wobei hier die linke Armlehne 2 (in Fig. 2 dagegen die rechte) hochgeschwenkt ist. Hierzu sind die Fixierungen 3 als Schwenkachsen 3a für die Armlehnen 2 ausgebildet, wobei zwischen Rücklehne 1a und Armlehne 2 ein geringer Montagespalt S verbleibt. An der in Fig. 1 dargestellten Rückseite des Fahrzeugsitzes 1 ist eine Verstauvorrichtung 4 vorgesehen, die aus wenigstens einer Halterungseinrichtung 6 zur lösbaren Befestigung an dem Fahrzeugsitz 1 besteht.

Die Halterungseinrichtung 6 ist hierbei bevorzugt mit einem Behälter 5 versehen und als Bügel 6a ausgebildet, der über die Fahrzeugsitz-Breite von der rechten Armlehne 2 bis zur linken Armlehne 2 reicht. Diese bügelförmige Halterungseinrichtung 6 ist hierbei an den Fixierungen 3, nämlich den Schwenkachsen 3a, für die Armlehnen 2 eingehängt, wie dies in Fig. 2 und 3 näher dargestellt ist. Hierbei wird der Bügel 6a mit seinen relativ flach gestalteten und abgerundeten Enden 6b (vgl. insbesondere Fig. 3) in den Spalt S zwischen Rücklehne 1a und den beiden Armlehnen 2 eingeschoben.

Es sei darauf hingewiesen, daß der Spalt S auch dadurch geschaffen werden kann, daß die seitlichen Polsterungen der Armlehnen 2 und der Rücklehne 1a etwas zusammengedrückt werden, so daß die beiden Enden 6b des Bügels 6a dazwischen eingeschoben werden können. Dies ist sogar erwünscht, da hierdurch in der montierten Stellung des Bügels 6a eine sichere Halterung durch die nachgiebige Polsterung erzielt wird. Entsprechendes gilt für die in Fahrtrichtung mögliche Nachgiebigkeit der Rücklehne 1a, wodurch der Bügel 6a zusammen mit den Enden 6b über die Schwenkachsen 3a gestülpt werden kann und somit einen sicheren Halt für die Verstauvorrichtung 4 bietet.

Der am Bügel 6a angehängte, eingeclipste oder aufgesteckte Behälter 5 weist bevorzugt mehrere Fächer 5a, 5b, 5c, usw. auf. Dabei kann ein Fach bevorzugt auch als Abfallfach 5d ausgebildet sein, das mit einem in Fig. 2 in Strichlinien dargestellten Deckel verschließbar ist. Ebenso kann ein Fach als Getränkedosenhalter 5e ausgebildet sein, wie dies in Fig. 3 dargestellt ist.

Die Außenwand 7 des Behälters 5 ist bevorzugt nachgiebig und gepolstert ausgebildet, während der Behälter 5 am oberen Ende mittels Steckverbindungen 4a an dem Bügel 6a befestigt ist, wie dies in Fig. 2 mittels einer Umgriffshalterung dargestellt ist. Es sind jedoch auch Clipsverbindungen oder ähnliche Fixierungsmöglichkeiten zwischen dem Behälter 5 und der Halterungseinrichtung 6 möglich, um hier den Behälter 5 separat von dem Bügel 6a abnehmen zu können. Die Verstauvorrichtung 4 ist jedoch durch Lösen des Umgriffes der Enden 6b an den Schwenkachsen 3a auch als Gesamtes schnell und einfach abnehmbar, wobei der Bügel 6a nur leicht gegen die Rücklehne 1a gedrückt werden braucht, um die umgreifenden Enden 6b über den Schwenkachsen 3a zu lösen. Anstatt eines Behälters 5 ( oder ergänzend zu diesem) kann auch ein Kleiderbügel o. dgl. an der Halterungseinrichtung 6 befestigt sein.

In Fig. 2 ist die Seitenansicht bei einer hochgeklappten Armlehne 2 dargestellt, insbesondere in Strichlinien der Umgriff der Enden 6b der Halterungseinrichtung 6 um die Schwenkachsen 3a in Form eines Dreiviertelkreises. Eine ähnliche Fixierung ist für die Halterung 4a am oberen Ende des Behälters 5 gezeigt. Wie vorstehend angegeben, ist die Befestigung des Behälters 5 an der Halterungseinrichtung 6 auch durch nicht näher dargestellte Steck- oder Clipsverbindungen möglich. Auch eine Fixierung mittels eines Reißverschlusses oder Klettverschlüssen ist denkbar.

In Fig. 3 ist die Verstauvorrichtung 4 separat, also in abgenommener Stellung von dem Fahrzeugsitz 1, dargestellt. Hieraus ist insbesondere die gebogene Ausführung der Enden 6b des Bügels 6a ersichtlich. Der Bügel 6a ist dabei bevorzugt als Flachband aus Kunststoff oder Metall ausgebildet oder als Metallrohr, wobei in besonders vorteilhafter Weise ein Teleskopgestänge 8 mit den ineinandergesteckten Hälften der Halterungseinrichtung 6 in Form des Bügels 6a gebildet sein kann. Hierdurch ist eine Anpassung an unterschiedliche Breiten des Fahrzeugsitzes 1 möglich, so daß die Verstauvorrichtung 4 nicht nur zwischen gleichen Sitzen schnell umsteckbar ist, sondern auch zwischen Fahrzeugsitzen unterschiedlicher Breite. Hierdurch wird die universelle Anwendbarkeit und Nachrüstmöglichkeit der Verstauvorrichtung 4 erhöht.

Der Behälter 5 kann dabei unterschiedliche Fachaufteilungen aufweisen, beispielsweise eine Kartentasche oder, wie in Fig. 2 dargestellt, eine Abfallbox 5d oder einen in Fig 3 schematisch dargestellten, klammerförmigen Getränkedosenhalter 5e. Durch die Elastizität der Rückseite der Rücklehne 1a wird dabei die Umgriffshalterung 4a an den Bügel 6a angepreßt, so daß eine stabile Lage des Behälters 5 erreicht wird. Durch das Einführen der Enden 6b der bügelförmigen Halterungseinrichtung 6 in den Spalt S zwischen den Armlehnen 2 und der Rücklehne 1a wird zudem eine sichere und stabile Fixierung des Bügels 6a erreicht, so daß insgesamt die Verstauvorrichtung 4 auch bei starken Beschleunigungs- und Bremsmanövern lagestabil gehalten wird.

## Patentansprüche

1. Verstauvorrichtung (4) zur Verwendung an einem Fahrzeugsitz (1), der zwei Armlehnen (2) aufweist, die mit Fixierungen (3) an dem Fahrzeugsitz (1), bevorzugt hochschwenkbar, angelenkt sind, wobei die Verstauvorrichtung (4) wenigstens eine Halterungseinrichtung (6) zur lösbaren Befestigung an der Rückseite des Fahrzeugsitzes (1) aufweist und von Armlehne (2) zu Armlehne (2) reicht
**dadurch gekennzeichnet, daß**
die Halterungseinrichtung (6) an den Fixierungen (3) der Armlehnen (2) einhängbar ist, wobei
die Fixierungen (3) als Schwenkachsen (3a) für die Armlehnen (2) ausgebildet sind, und daß die Enden (6b) der Halterungseinrichtung (6) die Schwenkachsen (3a) umgreifen.

2. Verstauvorrichtung nach Anspruch 1, **dadurch gekennzeichnet, daß** die Halterungseinrichtung (6) als Bügel (6a) ausgebildet ist.

3. verstauvorrichtung nach Anspruch 2, **dadurch gekennzeichnet, daß** der Bügel (6a) als Metall-Rohr oder als Flachband ausgebildet ist.

4. Verstauvorrichtung nach einem der Ansprüche 1 bis 3, **dadurch gekennzeichnet, daß** ein Behälter (5) an der Halterungseinrichtung (6) eingeclipst oder angesteckt ist.

5. Verstauvorrichtung nach Anspruch 4, **dadurch gekennzeichnet, daß** der Behälter (5) mehrere Fächer (5a, 5b, 5c, ...) aufweist.

6. Verstauvorrichtung nach Anspruch 4 oder 5, **dadurch gekennzeichnet, daß** der Behälter (5) wenigstens ein mit Deckel verschließbares Abfallfach (5d) aufweist.

7. Verstauvorrichtung nach einem der Ansprüche 4 bis 6, **dadurch gekennzeichnet, daß** der Behälter (5) wenigstens einen Getränkedosenhalter (5e) aufweist.

8. Verstauvorrichtung nach einem der Ansprüche 4 bis 7, **dadurch gekennzeichnet, daß** der Behälter (5) eine nachgiebige, bevorzugt gepolsterte Außenwand (7) aufweist.

9. Verstauvorrichtung nach einem der Ansprüche 2 bis 8, **dadurch gekennzeichnet, daß** der Bügel (6a) zur Anpassung an unterschiedliche Fahrzeugsitz-Breiten ein Teleskopgestänge (8) aufweist.

## Claims

1. A stow-away apparatus (4) for use on a motor vehicle seat (1) comprising two armrests (2) which are linked, preferably in a manner to be upwardly swiveled, by means of fixing devices (3) to the vehicle seat (1), with the stow-away apparatus (6) comprising at least one support device (6) for detachable fastening to the rear side of the vehicle seat (1) and reaching from armrest (2) to armrest (2), **characterized in that** the support device (6) can be hooked into the fixing devices (3) of the armrests (2), with the fixing devices (3) being arranged as swivel pins (3a) for the armrests (2), and that the ends (6b) of the support device (6) encompassing the swivel pins (3a).

2. A stow-away apparatus according to claim 1, **characterized in that** the support device (6) is arranged as a bracket (6a).

3. A stow-away apparatus according to claim 2, **characterized in that** the bracket (6a) is arranged as a metal pipe or flat band.

4. A stow-away apparatus according to one of the claims 1 to 3, **characterized in that** a container (5) is clipped or inserted into the support device (6).

5. A stow-away apparatus according to claim 4, **characterized in that** the container (5) comprises several compartments (5a, 5b, 5c, ...).

6. A stow-away apparatus according to claim 4 or 5, **characterized in that** the container (5) comprises at least one garbage compartment (5d) which can be closed with a lid.

7. A stow-away apparatus according to one of the claims 4 to 6, **characterized in that** the container (5) comprises at least one can holder (5e).

8. A stow-away apparatus according to one of the claims 4 to 7, **characterized in that** the container (5) comprises a resilient outside wall (7) which is preferably cushioned.

9. A stow-away apparatus according to one of the claims 2 to 8, **characterized in that** the bracket (6a) comprises a telescopic rod assembly (8) for adjustment to different widths of the vehicle seat.

## Revendications

1. Rangement (4) destiné à être utilisé sur un siège de véhicule (1) comportant deux accoudoirs (2) articulés par des fixations (3) sur le siège de véhicule (1), de préférence de façon à pouvoir pivoter vers le haut, lequel rangement (4) possède au moins un dispositif d'accrochage (6) pour sa fixation amovible sur l'arrière du siège de véhicule (1) et va d'un accoudoir (2) à l'autre, **caractérisé en ce que** le dispositif d'accrochage (6) peut être accroché aux fixations (3) des accoudoirs (2), lesquelles fixations (3) sont conformées comme des axes de pivotement (3a) pour les accoudoirs (3), et **en ce que** les extrémités (6b) du dispositif d'accrochage (6) se mettent en prise sur les axes de pivotement (3a).

2. Rangement selon la revendication 1, **caractérisé en ce que** le dispositif d'accrochage (6) est conformé comme un étrier (6a).

3. Rangement selon la revendication 2, **caractérisé en ce que** l'étrier (6a) est conçu comme un tube métallique ou une bande plate.

4. Rangement selon l'une des revendications 1 à 3, **caractérisé en ce qu'**un bac (5) est clipsé ou emboîté sur le dispositif d'accrochage (6).

5. Rangement selon la revendication 4, **caractérisé en ce que** le bac (5) comporte plusieurs compartiments (5a, 5b, 5c,...).

6. Rangement selon la revendication 4 ou 5, **caractérisé en ce que** le bac (5) possède au moins une poubelle (5d) pouvant être fermée par un couvercle.

7. Rangement selon l'une des revendications 4 à 6, **caractérisé en ce que** le bac (5) comporte au moins un support pour une boîte de boisson (5e).

8. Rangement selon l'une des revendications 4 à 7, **caractérisé en ce que** le bac (5) possède une paroi extérieure (7) souple, de préférence rembourrée.

9. Rangement selon l'une des revendications 2 à 8, **caractérisé en ce que** l'étrier (6a) possède, afin de s'adapter à différentes largeurs de sièges de véhicule, une barre télescopique (8).
